# EUROPÄISCHE PATENTANMELDUNG

(11) **EP 1 876 474 A2**
(43) Veröffentlichungstag der Anmeldung: **09.01.2008**
(21) Anmeldenummer: 07011696.7
(22) Anmeldetag: 14.06.2007
(51) Int. Cl.: G01V 8/20

(54) **Justierbares Lichtschrankenelement**

(30) Priorität: 04.07.2006 DE 202006010344 U; 20.07.2006 DE 202006011219 U
(71) Anmelder: Marantec Antriebs- und Steuerungstechnik GmbH & Co. KG., 33426 Marienfeld (DE)
(72) Erfinder: Hörmann, Michael, 33790 Halle/Westfalen (DE)
(74) Vertreter: Laufhütte, Dieter

(57) **Zusammenfassung**

Die vorliegende Erfindung betrifft ein justierbares Lichtschrankenelement mit mindestens einer Kontrollanzeige, einem Befestigungsgehäuse und einem in dem Befestigungsgehäuse drehbaren Sende- oder Empfangselement, wobei die Kontrollanzeige an der Drehachse des Sende- oder Empfangselements angeordnet ist.

## Beschreibung

Die vorliegende Erfindung betrifft ein justierbares Lichtschrankenelement mit mindestens einer Kontrollanzeige, einem Befestigungsgehäuse und einem in dem Befestigungsgehäuse drehbaren Sende- oder Empfangselement.

Lichtschranken mit solchen Lichtschrankenelementen kommen insbesondere bei Garagentorsteuerungen zum Einsatz, um eine automatische Ansteuerung des Garagentorantriebs zu ermöglichen oder um Sicherheitsaufgaben zu erfüllen.

Eine Lichtschranke umfasst dabei üblicherweise zwei Lichtschrankenelemente: Einen Lichtschrankensender, welcher den Lichtstrahl der Lichtschranke aussendet, und einen Lichtschrankenempfänger, welcher den von dem Lichtschrankensender ausgestrahlten Lichtstrahl empfängt. Dabei müssen die Lichtschrankenelemente aufeinander ausgerichtet werden, um ein einwandfreies Funktionieren der Lichtschranke sicherzustellen. Hierzu ist das Sende- oder Empfangselement des jeweiligen Lichtschrankenelements in dem Befestigungsgehäuse drehbar. Bei dieser Justage der Lichtschrankenelemente ergeben sich in der Praxis öfters Probleme, da der Lichtschrankensender durch die kleinen optischen Öffnungswinkel des Lichtstrahls von weniger als +/- 5° sehr genau auf den Lichtschrankenempfänger ausgerichtet werden muß bzw. dieser sehr genau auf den Lichtschrankensender. Diese kleinen Öffnungswinkel sind aber von Vorteil, da so ungewollte Reflexionen, z. B. am Tor oder am Fußbodenbelag verhindert werden können. Die Öffnungswinkel der Lichtschranken werden deshalb tendenziell sogar noch geringer als die oben angegebenen +/- 5° gewählt. Darüber hinaus ergeben sich bei dem Justieren der Lichtschrankenelemente zusätzlich deshalb Probleme, weil das verwendete Infrarot-Licht der Lichtschranke nicht sichtbar ist und die optischen Achsen auch aufgrund der Gehäuseform üblicherweise nicht erkennbar sind.

Zur Erleichterung der Justage eines Lichtschrankenelements und dem damit verbundenen Ausrichten des in einem Befestigungsgehäuse drehbaren Sende- oder Empfangselements ist deshalb eine Kontrollanzeige vorgesehen, welche das Funktionieren der Lichtschranke signalisiert und durch welche die korrekte Justage des Lichtschrankenelements angezeigt werden kann.

Hierbei ergibt sich jedoch das Problem, dass eine auf dem Sende- oder Empfangselement angebrachte Kontrollanzeige durch das das drehbare Sende- oder Empfangselement umgebende Befestigungsgehäuse nur schlecht zu erkennen ist. Andere Anordnungen der Kontrollanzeige können aber sehr aufwendig sein.

Aufgabe der vorliegenden Erfindung ist es daher, ein justierbares Lichtschrankenelement zur Verfügung zu stellen, bei welchem die Kontrollanzeige gut sichtbar ist und welches einfach aufgebaut ist.

Erfindungsgemäß wird diese Aufgabe von einem justierbaren Lichtschrankenelement gemäß Anspruch 1 gelöst. Bei einem solchen justierbaren Lichtschrankenelement mit mindestens einer Kontrollanzeige, einem Befestigungsgehäuse und einem in dem Befestigungsgehäuse drehbaren Sende- oder Empfangselement ist die Kontrollanzeige erfindungsgemäß an der Drehachse des Sende- oder Empfangselements angeordnet. Hierdurch ist die Kontrollanzeige von außen sehr gut sichtbar und kann dennoch einfach mit der im Sende- oder Empfangselement angeordneten Elektronik verbunden werden.

In weiterhin vorteilhafter Weise ist die Kontrollanzeige an einem Ende der Drehachse angeordnet, welches eine Öffnung im Befestigungsgehäuse durchsetzt. Die Öffnung im Befestigungsgehäuse ist sowieso vorhanden, um die Drehachse des Sende- oder Empfangselementes aufzunehmen, so dass die an dem diese Öffnung durchsetzenden Ende der Drehachse angeordnete Kontrollanzeige sich an der Außenseite des Befestigungsgehäuses befindet und so gut sichtbar angeordnet ist.

Vorteilhafterweise sind dabei an beiden Enden der Drehachse Kontrollanzeigen angeordnet. So ist das Funktionieren der Lichtschranke von beiden Seiten des Befestigungsgehäuses aus gut zu überprüfen.

Vorteilhafterweise ist dabei die Drehachse des Sende- oder Empfangselementes fest mit Sende- oder Empfangselement verbunden. So kann auch die an der Drehachse angeordnete Kontrollanzeige mit der in dem Sende- oder Empfangselement befindlichen Elektronik verbunden werden, ohne dass diese Verbindung mechanischen Belastungen durch eine Drehung oder Bewegung des Sende- oder Empfangselements ausgesetzt ist. So vermindert sich der Verschleiß und es kann auf eine aufwendige flexible Verbindung zwischen Sende- oder Empfangselement und Kontrollanzeige verzichtet werden.

Vorteilhafterweise ist die Drehachse des Sende- oder Empfangselements drehbar im Befestigungsgehäuse gelagert. Dies geschieht in besonders vorteilhafter Weise dadurch, dass die Enden der Drehachse zwei in gegenüberliegenden Seitenwänden des Befestigungsgehäuses angeordnete Öffnungen durchsetzen. Die Drehachse kann damit zusammen mit dem Sende- oder Empfangselement im Befestigungsgehäuse gedreht werden und ermöglicht so eine einfache Justage der Lichtschranke.

Vorteilhafterweise weist die Drehachse dabei an mindestens einem Ende eine axiale Öffnung auf, in der die Kontrollanzeige angeordnet ist. Die Kontrollanzeige ragt so nur wenig aus dem Befestigungsgehäuse heraus und ist dennoch gut erkennbar.

In weiterhin vorteilhafter Weise umfasst die Drehachse einen Hohlzylinder. Im Inneren dieses Hohlzylinders können dann sowohl die Kontrollanzeige als auch die elektrischen Verbindungen zwischen Kontrollanzeige und der sich im Sende- oder Empfangselement befindlichen Elektronik angeordnet werden. Dies erlaubt eine besonders einfache und verschleißfreie Anordnung der Kontrollanzeige.

In weiterhin vorteilhafter Weise umfasst die Kontrollanzeige dabei eine Kontrolllampe oder eine LED. Durch das Aufleuchten der Kontrolllampe oder der LED kann angezeigt werden, ob die Lichtschranke funktioniert, so dass die richtige Justage des Sende- oder Empfangselementes auf einfache Art und Weise zu beurteilen ist.

Die vorliegende Erfindung wird nun anhand eines Ausführungsbeispiels näher beschrieben.

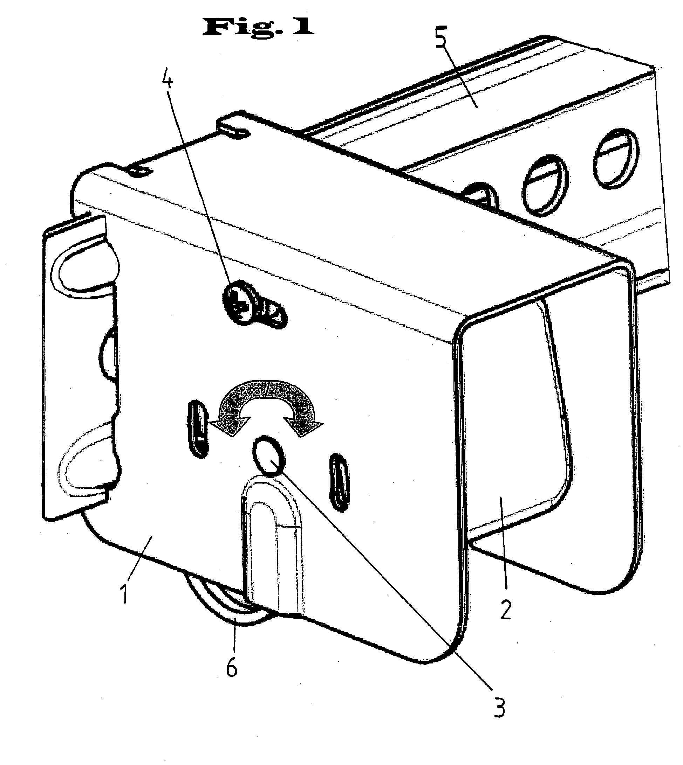

Dabei zeigt Figur 1 eine perspektivische Ansicht eines Ausführungsbeispiels der vorliegenden Erfindung.

Wie in Figur 1 zu sehen, umfasst das erfindungsgemäße justierbare Lichtschrankenelement ein Sende- oder Empfangselement 2, welches drehbar in dem Befestigungsgehäuse 1 montiert ist. Auf der Drehachse 3, welche zwei Öffnungen auf gegenüberliegenden Seiten des Befestigungsgehäuses 1 durchsetzt und fest mit dem Sende- oder Empfangselement 2 verbunden ist, ist an beiden Enden eine Kontrollanzeige angeordnet. Durch diese Kontrollanzeige wird angezeigt, ob die Lichtschranke ordnungsgemäß funktioniert. Um nun den Lichtschrankensender auf den Lichtschrankenempfänger der Lichtschranke auszurichten oder umgekehrt und damit die Lichtschranke zu justieren, kann das Sende- oder Empfangselement 2 in dem Befestigungsgehäuse gedreht werden, bis die Kontrollanzeige ein ordnungsgemäßes Funktionieren der Lichtschranke anzeigt und das Lichtschrankenelement richtig justiert ist. Das Sende- oder Empfangselement kann dann in der richtigen Position durch ein Feststellelement 4 festgestellt werden. Das Feststellelement 4 besteht hierbei aus einer Schraube, welche in einer Nut im Befestigungsgehäuse läuft und in das Sende- oder Empfangselement einschraubbar ist, so dass das Sende- oder Empfangselement in der richtigen Justageposition durch Anziehen der Schraube 4 festlegbar ist.

Dadurch, dass die Kontrollanzeige, welche z. B. aus einer Kontrolllampe oder einer LED bestehen kann, im Endbereich der Drehachse 3 angeordnet ist, ist die Kontrollanzeige sehr gut einsehbar. Um die Einsehbarkeit weiter zu verbessern und eine Kontrollanzeige auf beiden Seiten des Befestigungsgehäuses zu ermöglichen, ist auch auf der anderen, hier nicht gezeigten Seite des Gehäuses eine Kontrollanzeige im Endbereich der Drehachse angeordnet. Die Kontrollanzeige schaut dabei leicht aus dem Befestigungsgehäuse heraus, so dass jede einzelne Kontrollanzeige aus einem Winkelbereich von 180° zu sehen ist. Die Kontrollanzeige ist fest mit dem Sende- oder Empfangselement 2 verbunden, so dass sie durch das Verdrehen des Sende- oder Empfangselements 2 mechanisch nicht belastet wird.

Das Befestigungsgehäuse 1 ist wiederum an einer Montageleiste 5 befestigbar und entlang dieser Montageleiste 5 verschiebbar, so dass die Position des Lichtschrankenelements entlang der Montageleiste 5 verändert werden kann. Die Montageleiste 5 dient ebenfalls der Führung des Kabels 6, welches zu dem Sende- oder Empfangselement 2 führt. Das Befestigungsgehäuse 1 besteht dabei aus einem Metallblech, welches in U-Form gebogen wurde und in dessen sich gegenüberliegenden Seiten Aussparungen zur Aufnahme der Drehachse des Sende- oder Empfangselements vorgesehen sind. An der offenen Rückseite ist das Befestigungsgehäuse durch überkragende Elemente auf die Montageleiste 5 aufschiebbar, während der von dem Sendeelement ausgestrahlte bzw. von dem Empfangselement empfangene Lichtstrahl die offene Vorderseite des Befestigungsgehäuses ungehindert passieren kann.

## Patentansprüche

1. Justierbares Lichtschrankenelement mit mindestens einer Kontrollanzeige, einem Befestigungsgehäuse und einem in dem Befestigungsgehäuse drehbaren Sende- oder Empfangselement,
**dadurch gekennzeichnet,**
**dass** die Kontrollanzeige an der Drehachse des Sende- oder Empfangselements angeordnet ist.

2. Justierbares Lichtschrankenelement nach Anspruch 1, wobei die Kontrollanzeige an einem Ende der Drehachse angeordnet ist, welches eine Öffnung im Befestigungsgehäuse durchsetzt.

3. Justierbares Lichtschrankenelement nach Anspruch 1, wobei an beiden Enden der Drehachse Kontrollanzeigen angeordnet sind.

4. Justierbares Lichtschrankenelement nach Anspruch 1, wobei die Drehachse des Sende- oder Empfangselements fest mit dem Sende- oder Empfangselement verbunden ist.

5. Justierbares Lichtschrankenelement nach Anspruch 1, wobei die Drehachse des Sende- oder Empfangselements drehbar im Befestigungsgehäuse gelagert ist.

6. Justierbares Lichtschrankenelement nach Anspruch 1, wobei die Drehachse an mindestens einem Ende eine axiale Öffnung aufweist, in der die Kontrollanzeige angeordnet ist.

7. Justierbares Lichtschrankenelement nach Anspruch 1, wobei die Drehachse einen Hohlzylinder umfasst.

8. Justierbares Lichtschrankenelement nach Anspruch 1, wobei die Kontrollanzeige eine Kontrolllampe oder eine LED umfasst.
